## Europäisches Patentamt

## European Patent Office

## Office européen des brevets

(19)

(11) Veröffentlichungsnummer: **0 012 902**
A1

(12) **EUROPÄISCHE PATENTANMELDUNG**

(21) Anmeldenummer: **79105030.5**

(22) Anmeldetag: **10.12.79**

(51) Int. Cl.³: **B 60 K 17/10**

(30) Priorität: **22.12.78 DE 2855573**

(43) Veröffentlichungstag der Anmeldung:
**09.07.80 Patentblatt 80/14**

(84) Benannte Vertragsstaaten:
**AT BE CH FR GB IT NL SE**

(71) Anmelder: **Auto-Heinen Ing. Heinrich Heinen GmbH & Co.**
**Richard-Wagner-Strasse 39**
**D-5000 Köln 1(DE)**

(72) Erfinder: **Christoph, Werner, Ing.(grad.)**
**Ochhermen 5**
**D-5358 Bad Münstereifel(DE)**

(74) Vertreter: **Buschhoff, Josef, Dipl.-Ing. et al,**
**Kaiser-Wilhelm-Ring 24 Postfach 190 408**
**D-5000 Köln 1(DE)**

(54) **Antrieb für Landfahrzeuge.**

(57) Antrieb für Landfahrzeuge, bei dem den Antriebsrädern ($10_L$ und $11_L$ bzw. $10_R$ und $11_R$) auf jeder Fahrzeugseite (L bzw. R) eigene, aus Hydropumpe ($14_L$ bzw. $14_R$) und Hydromotoren ($12_L$, $13_L$ bzw. $12_R$, $13_R$) bestehende hydraulische Antriebssysteme (A bzw. B) zugeordnet sind, welche durch eine sperrbare Ausgleichsleitung (25) verbunden sind. Die Ausgleichsleitung (25) ermöglicht bei Kurvenfahrt mit Allradantrieb einen Ausgleich der von den Hydromotoren beider Fahrzeugseiten zu verarbeitenden unterschiedlich großen Flüssigkeitsmengen und -drücke, während bei Geradeausfahrt die volle Antriebsleistung gleichmäßig auf alle Antriebsräder übertragen wird. Die Differentialwirkung kann durch Schließen des Absperrventils (26) auch aufgehoben werden (Differentialsperre).

EP 0 012 902 A1

0012902

Anm.: Auto-Heinen Ing. Heinrich Heinen GmbH & Co. ;
Richard-Wag ner-Straße 39, 5000 Köln 1

Titel: Antrieb für Landfahrzeuge

Die Erfindung betrifft einen Antrieb für Landfahrzeuge mit
auf gegenüberliegenden Fahrzeugseiten angeordneten Antriebsrädern, die von einem beliebigen Antriebsaggregat
über ein hydraulisches Antriebssystem angetrieben werden.

Es sind hydraulische Fahrantriebe dieser Art bekannt, bei
denen das hydraulische Antriebssystem aus einer Pumpe und
einer Turbine besteht, die gewöhnlich zu einer Einheit zusammengebaut sind. Das Antriebsmoment wird dann über ein
übliches mechanisches Planeten-Differentialgetriebe auf
die Antriebsräder auf beiden Seiten des Fahrzeuges übertragen.

Diese bekannten Antriebe sind sehr aufwendig und beanspruchen unter dem Fahrzeug viel Raum, wodurch die Bodenfreiheit des Fahrzeuges verringert wird. Außerdem vergrößert
das mechanische Differentialgetriebe die ungefederten Massen beträchtlich. Bei allradgetriebenen Fahrzeugen mit mehreren Fahrzeugachsen ist für jede Achse ein eigenes Differentialgetriebe erforderlich. Bei geländegängigen Fahrzeugen muß dann außerdem für jedes Differentialgetriebe eine Differentialsperre mit den hierfür erforderlichen Betätigungsorganen vorgesehen werden. Dies führt zu sehr hohen Herstellungs- und Wartungskosten für das Fahrzeug, dessen Antrieb infolge der vielen mechanischen Getriebe verhältnismäßig störanfällig ist.

Aufgabe der Erfindung ist es, einen sehr einfachen hydraulischen Antrieb für Landfahrzeuge zu schaffen, der kein mechanisches Differentialgetriebe benötigt und es gestattet, die unterschiedlichen Drehzahlen von auf gegenüberliegenden Fahrzeugseiten angeordneten Rädern bei Kurvenfahrt exakt auszugleichen und bei Geradeausfahrt die volle Antriebsleistung gleichmäßig auf alle Antriebsräder zu übertragen. Außerdem soll der Antrieb so ausgebildet sein, daß der Kraftausgleich zwischen den Antriebsrädern auf der einen Seite und den Antriebsrädern auf der anderen Seite des Fahrzeuges bei Bedarf mit sehr einfachen Mitteln unterbrochen werden kann, so daß alle Antriebsräder unabhängig von der Haftreibung des jeweiligen Rades gleiche Antriebsleistung erhalten.

Diese Aufgabe wird mit der Erfindung dadurch gelöst, daß den Antriebsrädern auf jeder Seite des Fahrzeuges ein eigenes, aus Hydropumpe und Hydromotoren bestehendes hydraulisches Antriebssystem zugeordnet ist und daß die hydraulischen Antriebe der auf gegenüberliegenden Fahrzeugseiten angeordneten Antriebsräder durch eine Ausgleichsleitung verbunden sind.

Bei einem derartigen Antrieb sind jedem Rad nur sehr kleine, ungefederte Massen zugeordnet, da die benötigten Hydromotoren im Verhältnis zu der von Ihnen übertragenen Lei-

...ng nur ein sehr kleines Volumen und ein verhältnismäßig
...nges Gewicht haben. Werden die Hydropumpen von ihren
...motoren getrennt im gefederten Fahrzeug untergebracht
...mit ihren Hydromotoren nur durch Hydraulikleitungen
...unden, können die ungefederten Massen noch weiter verringert werden. Außerdem wird die Bodenfreiheit des Fahrzeuges erheblich vergrößert, da keine durchgehenden Radachsen erforderlich sind und sich in Fahrzeugmitte keine
voluminösen Antriebsgetriebe befinden.

Nach einem weiteren Merkmal der Erfindung ist die Ausgleichsleitung sperrbar. Zu diesem Zweck kann die Ausgleichsleitung ein vorzugsweise elektromagnetisch betätigbares, in zwei Richtungen durchströmbares 2/2-Wegeventil
aufweisen, das vom Führerstand des Fahrzeuges aus betätigt
werden kann. In geschlossenem Zustand wirkt dieses Ventil
wie eine Differentialsperre, die den Druck- und Mengenausgleich der Hydraulikflüssigkeit zwischen den auf den beiden Fahrzeugseiten angeordneten hydraulischen Antriebssystemen verhindert. Der Hydromotor eines jeden hydraulischen Antriebssystems treibt dann die ihm zugeordneten Antriebsräder unabhängig von den Antriebsrädern der gegenüberliegenden Fahrzeugseite mit der Geschwindigkeit an,
die der Antriebsleistung entspricht, welche von der Hydropumpe des zugeordneten hydraulischen Antriebssystems erzeugt wird.

Um insbesondere bei mehrachsigen Fahrzeugen Höchstdrucküberschreitungen im System zu vermeiden, ist jedes hydraulische Antriebssystem zweckmäßig mit einem einstellbaren
Druckbegrenzungsventil versehen.

Die Hydropumpen sind zweckmäßig Pumpen mit einer Förderrichtung und verstellbarem Verdrängungsvolumen, während
die Hydromotoren konstantes Verdrängervolumen haben. Für
Rückwärtsfahrt kann der Druckmittelstrom entweder durch die Pumpen selbst oder durch Steuerschieber umgesteuert
werden.

Für die Antriebe können zweckmäßig Axial- oder Radialkolbenpumpen verwendet werden, die nahezu verlustfrei arbeiten und einen hohen Wirkungsgrad haben.

Bei einem Antrieb mit mehreren Antriebsradpaaren, insbesondere einem sogenannten "Allradantrieb", ist es zweckmäßig,
wenn mindestens ein Radpaar vom Antrieb abschaltbar ist,
damit bei Straßenfahrt nur ein oder zwei Radpaare angetrieben werden. Zu diesem Zweck sind in den Vorlaufleitungen
der Hydromotoren für das vom Antrieb abschaltbare Radpaar
zweckmäßig gemeinsam betätigbare Absperrventile angeordnet,
von denen sperrbare Rücklaufleitungen für die Hydromotoren
der übrigen Antriebsräder abzweigen.

Weitere Merkmale und Vorteile der Erfindung ergeben sich
aus der nachfolgenden Beschreibung und der beigefügten
Zeichnung, in der ein Ausführungsbeispiel eines erfindungsgemäßen Antriebes für ein vierrädriges Kraftfahrzeug mit
hydraulischem Allradantrieb in einer schematischen Darstellung gezeigt ist.

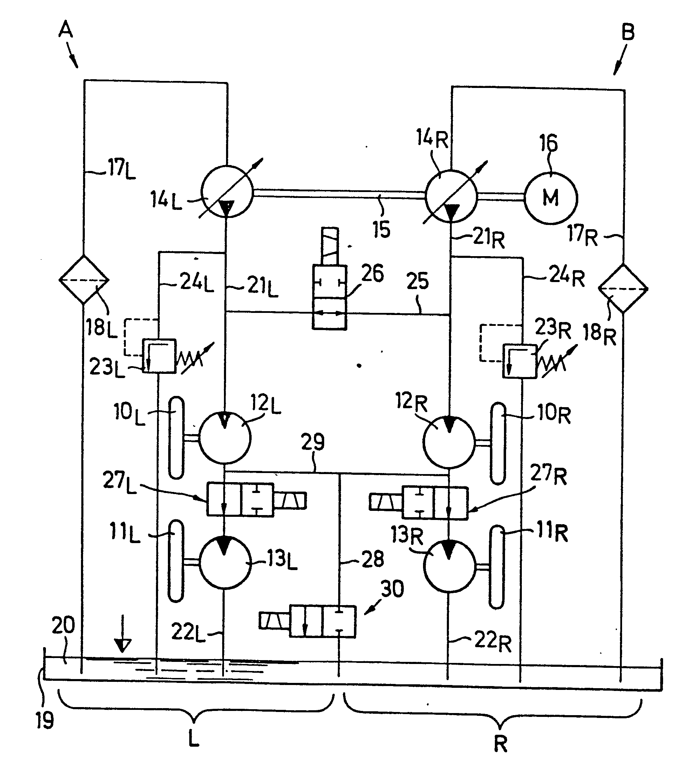

In der Zeichnung ist mit L die linke Fahrzeugseite und mit
R die rechte Fahrzeugseite eines allradgetriebenen Vierradfahrzeuges bezeichnet, das beispielsweise ein gändegängiges landwirtschaftliches Fahrzeug oder ein Militärfahrzeug
sein kann. Jedes der Hinterräder $10_L$ und $10_R$ und der Vorderräder $11_L$ und $11_R$ wird von einem Hydromotor $12_L$ bzw.
$12_R$ bzw. $13_L$ bzw. $13_R$ angetrieben. Bei dem vorliegenden
Ausführungsbeispiel haben die Hydromotoren eine Strömungsrichtung und je Umdrehung ein konstantes Verdrängungsvolumen. Es können jedoch auch Hydromotoren mit zwei Strömungsrichtungen verwendet werden.

Den in Reihe geschalteten Hydromotoren $12_L$ und $13_L$ der linken Fahrzeugseite L ist eine eigene Hydropumpe $14_L$ und den in Reihe geschalteten Hydromotoren $12_R$ und $13_R$ der rechten Fahrzeugseite R ist eine eigene Hydropumpe $14_R$ zugeordnet. Diese Hydropumpen haben verstellbare Verdrängungsvolumina und sind in der Zeichnung als Hydropumpen mit einer Förderrichtung dargestellt. Es können jedoch auch umsteuerbare Hydropumpen mit zwei Förderrichtungen verwendet werden.

Beide Hydropumpen $14_L$ und $14_R$ werden gemeinsam über ein geeignetes Antriebsgetriebe, das hier nur als einfache gemeinsame Welle 15 dargestellt ist, von einem beliebigen Antriebsaggregat 16 angetrieben, das beispielsweise ein Verbrennungsmotor oder ein Elektromotor sein kann.

Die Hydropumpen $14_L$ und $14_R$ saugen durch die Vorlaufleitungen $17_L$ und $17_R$ durch Filter $18_L$ und $18_R$ aus dem Vorratsbehälter 19 Hydraulikflüssigkeit 20 an und drücken sie durch die Druckleitungen $21_L$ und $21_R$ in die hintereinandergeschalteten Hydromotoren $12_L$ und $13_L$ bzw. $12_R$ und $13_R$. Von dort aus fließt die Hydraulikflüssigkeit durch die Rücklaufleitungen $22_L$ und $23_L$ in den Vorratsbehälter 19 zurück. Um unzulässig hohe Drücke zu vermeiden, hat jedes der beiden hydraulischen Antriebssysteme A und B für die linke und rechte Fahrzeugseite L bzw. R ein einstellbares Druckbegrenzungsventil $23_L$ bzw. $23_R$, das in einer an die Druckleitung $21_L$ bzw. $21_R$ angeschlossenen Zweigleitung $24_L$ bzw. $24_R$ angeordnet ist, die in den Vorratsbehälter 19 zurückführt.

Wie aus der Zeichnung hervorgeht, sind die Druckleitungen $21_L$ und $21_R$ der beiden hydraulischen Antriebssysteme A und B durch eine Ausgleichsleitung 25 miteinander verbunden, in die ein in zwei Richtungen durchströmbares Absperrventil 26 eingebaut ist. Das Absperrventil 26 ist bei dem vorliegenden Ausführungsbeispiel als 2/2-Wegeventil mit Sperrstellung und Durchfluß-Nullstellung ausgebildet und in zwei Wirkrichtungen betätigbar. Das Ventil 26 ist also in der Regel offen, so daß ein ständiger Druck- und Mengenausgleich zwischen den beiden Druckleitungen $21_L$ und $21_R$ der beiden hydraulischen Antriebssysteme A und B stattfinden kann. Das Sperrventil 26 kann vom Führerstand des Fahrzeuges aus wahlweise betätigt und in seine Offen- und Schließstellung gebracht werden.

Um die Hydromotoren $13_L$ und $13_R$ für die Vorderräder $11_L$ und $11_R$ vom Antrieb abschalten zu können, ist zwischen den Hydromotoren $12_L$ und $13_L$ bzw. $12_R$ und $13_R$ in die Druckleitung $21_L$ bzw. $21_R$ je ein elektromagnetisch betätigbares Absperrventil $27_L$ bzw. $27_R$ eingeschaltet. Die beiden Absperrventile $27_L$ und $27_R$ können gemeinsam vom Führerstand des Fahrzeuges aus betätigt werden. In ihrer Schließstellung sperren sie den Zufluß von Hydraulikflüssigkeit zu den Hydromotoren $13_L$ und $13_R$, so daß diese Hydromotoren nicht angetrieben werden und die Vorderräder $11_L$ und $11_R$ frei laufen.

Wenn sich die Absperrventile $27_L$ und $27_R$ in ihrer Sperrstellung befinden, kann die aus den Hydromotoren $12_L$ und $12_R$ der Hinterräder $10_L$ und $10_R$ austretende Hydraulikflüssigkeit durch eine besondere Rücklaufleitung 28 in den Vorratsbehälter 19 zurückfließen. Diese Rücklaufleitung 28 ist mit einer Verbindungsleitung 29 verbunden, die einerseits zwischen dem Hydromotor $12_L$ für das Hinterrad $10_L$ und dem Absperrventil $27_L$ an die Druckleitung $21_L$ und andererseits zwischen dem Hydromotor $12_R$ und dem Absperrventil $27_R$ an die Druckleitung $21_R$ angeschlossen ist. Die Rücklaufleitung 28 hat ebenfalls ein elektromagnetisch betätigtes Absperrventil 30 mit Sperr-Nullstellung, das gemeinsam mit den Absperrventilen $27_L$ und $27_R$ derart betätigt wird, daß das Absperrventil 30 geschlossen ist, wenn die Absperrventile $27_L$ und $27_R$ offen sind, und daß es geöffnet wird, wenn die Absperrventile $27_L$ und $27_R$ geschlossen werden.

Bei Geländefahrt mit Allradantrieb nehmen alle Ventile die
in der Zeichnung dargestellten Stellungen ein. Wenn bei Kurvenfahrt die Antriebsräder $10_L$ und $11_L$ der linken Fahrzeugseite L einerseits und die Antriebsräder $10_R$ und $11_R$ der
rechten Fahrzeugseite andererseits mit unterschiedlichen
Drehzahlen laufen, werden die hierbei von den Hydromotoren
zu verarbeitenden unterschiedlich großen Flüssigkeitsmengen
und -drücke durch die Ausgleichsleitung 25 vollständig ausgeglichen, während kurzzeitige Druckerhöhungen und Spannungsspitzen durch die Überdruckventile $23_L$ bzw. $23_R$ bebeseitigt werden.

Wenn bei Straßenfahrt mit höherer Geschwindigkeit der Antrieb der Vorderräder $11_L$ und $11_R$ abgeschaltet werden soll,
werden die Absperrventile $27_L$, $27_R$ und 30 gleichzeitig betätigt. Hierbei gelangen die Absperrventile $27_L$ und $27_R$ in
ihre Sperrstellung und das Absperrventil 30 in seine Offenstellung. Den Hydromotoren $13_L$ und $13_R$ für die Vorderräder
$11_L$ und $11_R$ fließt dann keine Druckflüssigkeit mehr zu,
während die aus den Hydromotoren $12_L$ und $12_R$ der Hinterräder austretende Druckflüssigkeit durch die Verbindungsleitung 29 und die Rücklaufleitung 28 in den Vorratsbehälter
19 zurückfließt.

Soll bei Fahrten im schwierigen Gelände die Differentialwirkung aufgehoben und erreicht werden, daß die hydraulischen Antriebssysteme A und B für die beiden Fahrzeugseiten
L und R unabhängig arbeiten, wird das Absperrventil 26 in
seine Sperrstellung gebracht. Die Ausgleichsleitung 25 ist
dann gesperrt und die Räder $10_L$ und $11_L$ der linken Fahrzeugseite L erhalten ebenso wie die Antriebsräder $10_R$ und
$11_R$ der rechten Fahrzeugseite R unabhängig voneinander die
volle, von den ihnen zugeordneten Hydropumpen $14_L$ bzw. $14_R$
erzeugte Antriebsleistung. In diesem Falle befinden sich
die Absperrventile $27_L$, $27_R$ und 30 zweckmäßig in der in der
Zeichnung dargestellten Stellung, so daß alle vier Räder angetrieben werden.

Für Rückwärtsfahrt kann der Druckmittelstrom entweder durch
die Pumpen selbst oder durch hier nicht näher dargestellte
Steuerschieber umgesteuert werden. Derartige Umsteueraggregate und Umsteuerschaltungen sind bekannt und brauchen hier
nicht näher erläutert zu werden.

Die Erfindung ist nicht auf das Ausführungsbeispiel beschränkt. Beispielsweise ist der hydraulische Antrieb nach
der Erfindung auch für Fahrzeuge mit nur zwei oder für Fahrzeuge mit mehr als vier angetriebenen Rädern verwendbar. Beispielsweise könnten auf jeder Fahrzeugseite drei oder vier
angetriebene Räder vorhanden sein, die von in Reihe geschalteten Hydromotoren angetrieben werden, die wiederum paarweise in der beschriebenen oder einer ähnlichen Form vom
Antrieb abgeschaltet werden können. Es ist auch eine etwas
andere Ausbildung der Hydraulikschaltung möglich, beispielsweise wenn umsteuerbare Pumpen oder Hydromotoren verwendet
werden, ohne daß hierdurch der Rahmen der Erfindung überschritten wird.

<del>V</del>
Aktenz.:

Anm.: Auto-Heinen Ing. Heinrich Heinen GmbH & Co.
Richard-Wagner-Straße 39, 5000 Köln 1

Titel: Antrieb für Landfahrzeuge

A n s p r ü c h e:

1. Antrieb für Landfahrzeuge mit auf gegenüberliegenden
Fahrzeugseiten angeordneten Antriebsrädern, die von
einem beliebigen Antriebsaggregat über ein hydraulisches Antriebssystem angetrieben werden, dadurch gekennzeichnet, daß den Antriebsrädern ($10_L$ und $11_L$
bzw. $10_R$ und $11_R$) auf jeder Fahrzeugseite (L bzw. R)
ein eigenes, aus Hydropumpe ($14_L$ bzw. $14_R$) und Hydromotoren ($12_L$, $13_L$ bzw. $12_R$, $13_R$) bestehendes hydraulisches Antriebssystem (A bzw. B) zugeordnet ist und
daß die hydraulischen Antriebe (A bzw. B) der auf gegenüberliegenden Fahrzeugseiten (L und R) angeordneten Antriebsräder ($10_L$, $11_L$ bzw. $10_R$, $11_R$) durch eine Ausgleichsleitung (25) verbunden sind.

2. Antrieb nach Anspruch 1, dadurch gekennzeichnet, daß
die Ausgleichsleitung (25) sperrbar ist.

3. Antrieb nach Anspruch 1 oder 2, dadurch gekennzeichnet, daß die Ausgleichsleitung (25) ein elektromagnetisch betätigbares Absperrventil (26) aufweist.

4. Antrieb nach einem der Ansprüche 1 bis 3, dadurch gekennzeichnet, daß jedes hydraulische Antriebssystem (A, B) ein einstellbares Druckbegrenzungsventil ($23_L$ bzw. $23_R$) aufweist.

5. Antrieb nach einem der Ansprüche 1 bis 4, dadurch gekennzeichnet, daß die Hydropumpen ($14_L$ und $14_R$) von ihren Hydromotoren ($12_L$, $13_L$ bzw. $12_R$, $13_R$) getrennt im gefederten Fahrzeug untergebracht und mit ihren an den Radachsen angeordneten Hydromotoren ($12_L$, $13_L$ bzw. $12_R$, $13_R$) durch Hydraulikleitungen ($21_L$, $21_R$) verbunden sind.

6. Antrieb nach einem der Ansprüche 1 bis 5, dadurch gekennzeichnet, daß die Hydropumpen ($14_L$, $14_R$) Pumpen mit einer Förderrichtung und verstellbarem Verdrängungsvolumen sind, während die Hydromotoren (12, 13) konstantes Verdrängervolumen haben.

7. Antrieb nach einem der Ansprüche 1 bis 6 mit mehreren Antriebsradpaaren, dadurch gekennzeichnet, daß mindestens ein Antriebsradpaar ($11_L$, $11_R$) vom Antrieb abschaltbar ist.

8. Antrieb nach Anspruch 7, dadurch gekennzeichnet, daß in den Druckleitungen ($21_L$, $21_R$) der Hydromotoren ($13_L$, $13_R$) für das vom Antrieb abschaltbare Radpaar ($11_L$, $11_R$) gemeinsam betätigbare Absperrventile ($27_L$, $27_R$) angeordnet sind, vor denen sperrbare Rücklaufleitungen (28, 29) für die Hydromotoren ($12_L$, $12_R$) der übrigen Antriebsräder ($10_L$, $10_R$) abzweigen.

0012902

Hi 151 EU

### Europäisches Patentamt

## EUROPÄISCHER RECHERCHENBERICHT

EP 79 105 030.5

| | EINSCHLÄGIGE DOKUMENTE | | KLASSIFIKATION DER ANMELDUNG (Int.Cl.) |
|---|---|---|---|
| Kategorie | Kennzeichnung des Dokuments mit Angabe, soweit erforderlich, der maßgeblichen Teile | betrifft Anspruch | |
| X | <u>DE - C - 1 258 284</u> (LINDE)<br>* Spalte 16, Zeilen 43 bis 55;<br>Fig. 3 *<br>--- | 1,2,<br>5,6 | B 60 K 17/10 |
| | <u>DE - A1 - 2 627 876</u> (I.C.P.U.C.)<br>* Seite 3, Zeile 11 bis Seite 4,<br>Zeile 18; Fig.<br>--- | 1,<br>4-7 | |
| | <u>DE - A - 2 009 975</u> (NATIONAL RESEARCH<br>DEVELOPMENT )<br>* Fig. 1 *<br>--- | 1,5,<br>6 | **RECHERCHIERTE SACHGEBIETE (Int.Cl.)** |
| | <u>DE - A - 1 919 693</u> (POCLAIN)<br>* Fig. 1, 3, 5 *<br>--- | 1,<br>5-7 | B 60 K 17/00<br>B 60 K 23/00<br>F 16 H 39/00 |
| | <u>US - A - 3 656 570</u> (GORTNAR et al.)<br>* Fig. 2, 6, 7 *<br>--- | 1,<br>5-7 | |
| | <u>DE - A1 - 2 515 135</u> (CLARK EQUIPMENT)<br>* Fig. 1, 4 *<br>---- | 1,<br>5-7 | |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 14-03-1980 | LEITZ |

EPA form 1503.1 06.78